Europäisches Patentamt

European Patent Office

Office européen des brevets

(11) Numéro de publication: **0 150 649**
A1

# (12) DEMANDE DE BREVET EUROPEEN

(21) Numéro de dépôt: **84402763.1**

(22) Date de dépôt: **28.12.84**

(51) Int. Cl.⁴: **F 02 K 1/60,** F 02 K 1/56

(30) Priorité: **05.01.84 FR 8400102**

(43) Date de publication de la demande: **07.08.85**
**Bulletin 85/32**

(84) Etats contractants désignés: **DE GB NL**

(71) Demandeur: **SOCIETE DE CONSTRUCTION DES AVIONS HUREL-DUBOIS, 39 rue Grange Dame-Rose, F-92360 Meudon-la-Foret (FR)**

(72) Inventeur: **Fournier, Alain, 34 rue Pierre Corby, F-92140 Clamart (FR)**
Inventeur: **Kennedy, John, 6, Square du Pont de Sèvres, F-92100 Boulogne (FR)**

(74) Mandataire: **Sauvage, Renée, Cabinet Sauvage 100 bis, avenue de Saint-Mandé, F-75012 Paris (FR)**

(54) Perfectionnement aux moteurs à réaction à double flux équipés d'un inverseur de poussée.

(57) L'invention concerne les moteurs à réaction du type à double flux équipés d'un inverseur de poussée. Afin de faciliter la déviation du flux dans le cas d'un inverseur à porte unique (7), des volets mobiles (26) sont prévus pour créer localement une zone de moindre pression sur le flux chaud, dans la région de l'ouverture par laquelle le flux est dévié.

L'invention s'applique aux inverseurs de poussée à porte unique.

Perfectionnement aux moteurs à réaction à double flux équipés d'un inverseur de poussée.

La présente invention concerne un perfectionnement aux moteurs à réaction du type à double flux équipés d'un inverseur de poussée. Plus particulièrement elle concerne un moteur équipé d'un inverseur à porte unique tel que celui qui fait l'objet de la demande de brevet français n° 8208545 déposée par la demanderesse le 17 mai 1983.

Dans cette demande de brevet, on a décrit un dispositif dans lequel un capotage extérieur entoure une tuyère axiale d'où s'écoule le "flux chaud", ce capotage délimitant avec la tuyère un conduit annulaire dans lequel circule un flux de gaz dit "flux froid" en provenance d'un ventilateur (ou "fan"). Le capotage présente au delà de l'extrémité arrière de la tuyère, un prolongement délimitant un canal circulaire. L'inverseur est constitué par une porte unique basculante formée par une partie mobile du prolongement du capotage, articulée autour d'un axe transversal à l'axe de la tuyère, cette porte pouvant évoluer d'une position escamotée dans le prolongement du capotage à une position déployée dans laquelle elle vient en butée contre la partie opposée fixe du capotage et s'étend transversalement au canal circulaire qu'elle obture tout en dégageant un espace libre en aval de la tuyère pour permettre à la totalité des gaz de s'échapper en une veine unique radialement vers l'extérieur.

On a indiqué dans le brevet antérieur les avantages que présente cette disposition et notamment la possibilité d'obtenir un flux dévié dans lequel la veine centrale chaude est enveloppée par la veine de gaz relativement froid de telle sorte que la porte d'inversion ne soit pas directement au contact de la veine chaude. Il en résulte une possibilité de réaliser une porte de structure plus simple donc plus légère et en matériaux moins coûteux que dans le cas où elle est soumise directement à l'action de la veine chaude.

La présente invention propose un perfectionnement qui améliore encore cette possibilité en facilitant la déviation du flux chaud et en augmentant la masse de gaz "froid" venant au contact de la porte lors de l'inversion de poussée. A cet effet, selon l'invention, on prévoit des moyens créant, lorsque la porte d'inverseur est en position déployée, une zone de moindre pression le long de la partie du bord de la tuyère axiale avoisinant la porte basculante. Cette zone de moindre pression peut être obtenue soit en provoquant une déviation anticipée d'une partie du flux chaud qui assure un laminage localisé de la veine froide au niveau de l'espace du capotage dégagé par la porte d'inverseur, soit en bloquant au moins partiellement l'écoulement de la veine "froide" en amont de l'espace libre dégagé par la porte, soit encore en combinant ces deux possibilités.

On obtient de ce fait un double effet, à savoir d'une part un rabattement de la veine chaude vers l'amont, c'est-à-dire en direction opposée à la porte déployée et d'autre part, étant donné le laminage localisé voire le blocage de la veine "froide dans la zone de l'ouverture du capotage, un déplacement des masses de la veine froide vers la zone opposée à l'ouverture et par conséquent un renforcement de l'épaisseur de la veine froide circulant entre la porte et la veine chaude.

3                    0150649

Tout se passe comme si la veine chaude était désaxée et écartée de la porte.

La commande des moyens créant cette zone de moindre pression est couplée avec la commande de la porte d'inverseur et de préférence asservie au déplacement de celle-ci.

On pourra obtenir l'effet recherché par divers moyens. Un de ces moyens pourra consister à assurer le long de la partie du bord de la tuyère avoisinant la porte basculante, une déviation latérale d'une partie du flux chaud avant que ce dernier franchisse le plan de l'extrémité arrière de la tuyère. Dans ce cas, on pourra prévoir un bord de tuyère équipé de volets mobiles entre une position inactive (ou de croisière) dans laquelle le flux chaud ne subit aucune déviation et une position active dans laquelle lesdits volets découvrent en amont du plan d'extrémité arrière de la tuyère, au moins un espace libre en direction de la porte d'inverseur. Le ou les volets en position active pourront obturer au moins partiellement le canal annulaire entourant la tuyère et dans lequel circule le flux froid.

Toutefois, on pourra préférer utiliser des moyens qui n'entraînent pas de modifications de la tuyère. Dans ce cas, lesdits moyens créant la zone de moindre pression assurent purement et simplement une restriction du passage du flux froid dans la partie du canal annulaire voisine de la porte d'inverseur.
Ces moyens pourront être constitués d'un ou plusieurs volets articulés, disposés dans le canal annulaire et mobiles entre

4  0150649

une position d'obturation du canal et une position effacée.

On décrira à présent, à titre d'exemple non limitatif plusieurs formes de réalisation de l'invention en référence aux dessins annexés dans lesquels :

la figure 1 est une vue schématique en coupe de l'extrémité d'un moteur double flux à inverseur de poussée équipé d'un dispositif de l'invention selon une première forme de réalisation, l'ensemble étant représenté en position de croisière ;

la figure 2 est une vue similaire à la figure 1 mais avec porte d'inverseur déployée ;

les figures 2A et 2B sont des coupes transversales de la veine gazeuse respectivement selon l'art antérieur et selon la ligne IIB-IIB de la figure 2 ;

la figure 3 représente une deuxième forme de réalisation de l'invention ;

la figure 4 représente une troisième forme de réalisation de l'invention qui est la forme de réalisation préférée ; et

la figure 4A est une coupe transversale du flux gazeux selon la ligne IVA - IVA de la figure 4

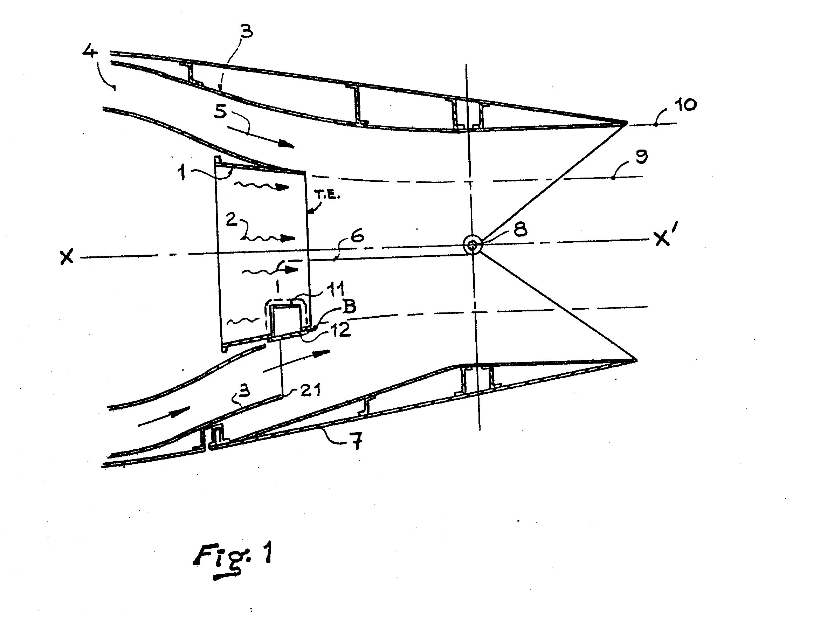

Les figures 1 à 4 représentent l'arrière d'un moteur à réaction à porte d'inversion unique comme celui qui est décrit dans la demande du brevet 8208545 et on ne le décrira donc pas en détail. Il suffit de rappeler que l'on a désigné en 1 la partie arrière de la tuyère axiale par laquelle sort le flux de gaz chaud 2 ; en 3 on a désigné le capotage extérieur délimitant avec la tuyère un canal annulaire 4 dans lequel circule le flux 5 de gaz dit "froid". Dans le capotage est prévue une ouverture 6 qui en position de croisière représentée à la figure 1 est obturée par la porte 7 de forme hemi-tronconique articulée autour de pivots 8 diamètralement opposés situés sensiblement dans un plan contenant l'axe x.x' de la tuyère.

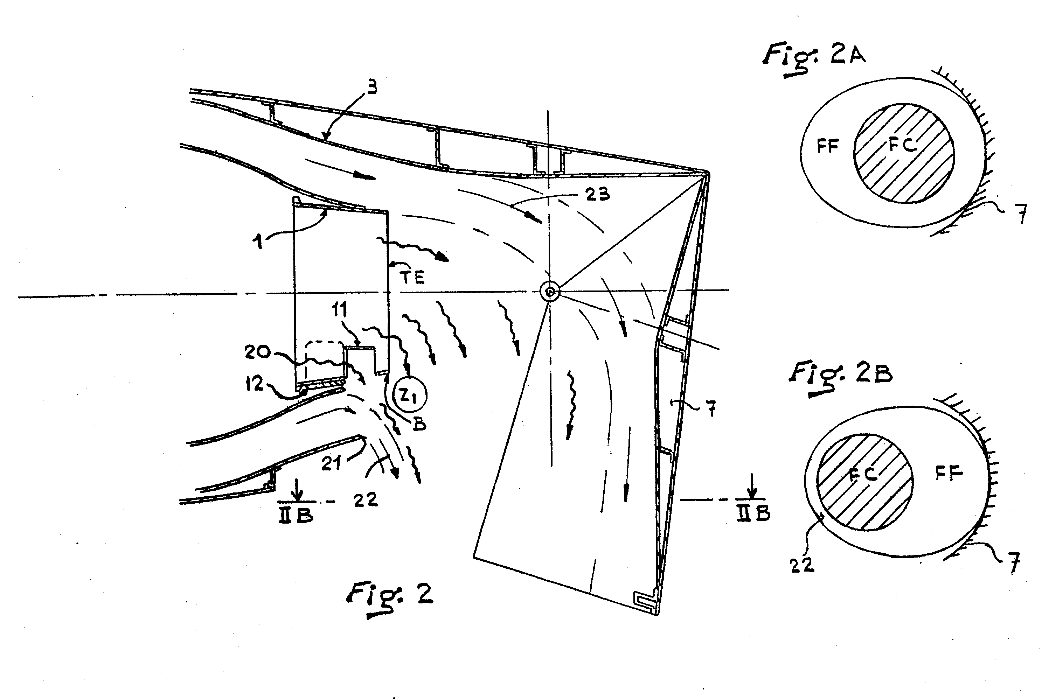

Dans l'exemple des figures 1 et 2, le bord 21 de l'ouverture du capotage peut être situé au même niveau que le plan TE de l'extrémité de la tuyère ou, comme représenté à la figure 1 légèrement en retrait vers l'amont par rapport à ce plan TE.

Dans la partie de la tuyère faisant face à l'ouverture du capotage sont prévus un ou plusieurs orifices 11 (un seul est représenté aux figures 1 et 2 par mesure de simplicité). Des volets 12 mobiles coulissant d'amont en aval sont prévus pour obturer ou dégager les orifices 11, ces volets étant commandés par tout moyen approprié non représenté asservi au déplacement de la porte d'inverseur 7. En position de croisière, les volets 12 obturent les orifices 11 et le flux chaud s'échappe axialement comme indiqué en 9, entouré par le flux froid 10.

Avec le système du brevet antérieur 8208545, lorsqu'on plaçait la porte en position d'inversion déployée, l'ensemble du jet était dévié et une coupe transversale du jet dévié avait sensiblement la configuration représentée à la figure 2A dans laquelle FC désigne le flux chaud et FF le flux froid.

On voit que le flux froid FF s'écrasait contre la porte 7 et que son épaisseur à cet endroit était plus faible qu'à l'opposé. Au contraire, comme le montre la figure 2B, grâce à la présente invention on obtient une configuration des flux toute différente, l'épaisseur du flux froid au droit de la porte étant nettement augmentée.

En effet, lors du déploiement de la porte 7 dans la position d'inversion représentée à la figure 2, les volets 12 s'escamotent et une partie 20 du flux chaud est admise à s'écouler en amont du plan TE de la tuyère.

Cette partie 20 du flux chaud vient laminer le flux froid 22 contre le bord 21 du capotage. Il en résulte qu'une partie du flux froid se déplace vers la zone 23 opposée du canal annulaire. Simultanément, du fait de la déviation anticipée d'une partie du flux chaud, il se crée, le long du bord B de la tuyère avoisinant les orifices 11, une zone de moindre pression $Z_1$ vers laquelle la masse du flux chaud sortant par le plan arrière TE de la tuyère a tendance à se précipiter. Ce double effet : attirance du flux chaud vers le bord 21 et déplacement du flux froid vers la partie haute du capotage permet d'obtenir la configuration de la figure 2B. On obtient donc ainsi une meilleure protection de la porte 7 contre les effets du flux chaud.

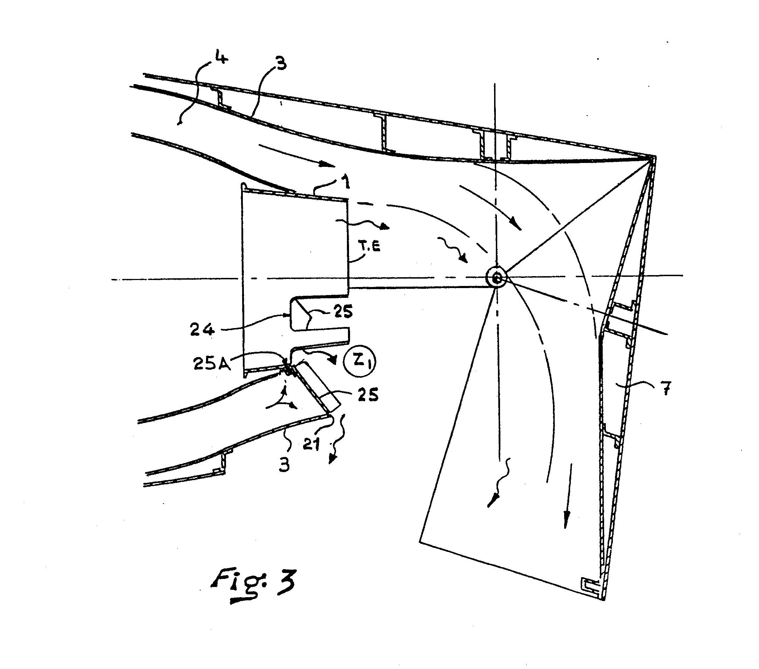

Dans la forme de réalisation de la figure 3, on a prévu sur le bord B de la tuyère avoisinant la porte 7 une série d'ouvertures 24 associées à des volets basculants 25 articulés à la tuyère en 25 A.

En position de vol en croisière, ces volets obturent les ouvertures 24. En revanche, en position de porte déployée représentée à la figure 3, lesdits volets se déploient sous l'impulsion de tout moyen de commande approprié non représenté et viennent en butée contre le bord 21 du capotage en obturant totalement ou partiellement la partie inférieure du canal annulaire 4. Une partie du flux de gaz chaud, comme dans le cas précédent, est alors déviée de façon anticipée dans cette région en créant une zone $Z1$ de moindre pression vers laquelle le reste du flux chaud est appelé. Simultanément, la circulation du flux froid étant bloquée dans cette région, ce dernier a tendance à se déplacer vers le haut du canal annulaire.

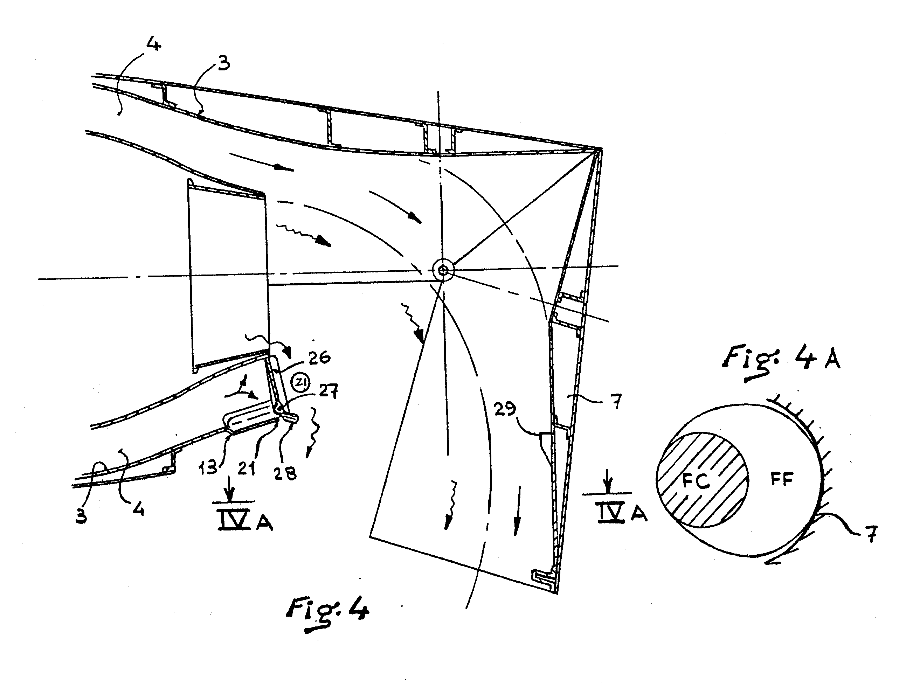

La forme de réalisation préférée de la figure 4 présente l'intérêt de ne pas modifier la tuyère. A cet égard, on monte sur le bord du capotage 3 situé au voisinage de la porte, un ou de préférence plusieurs volets 26 articulés en 27 sur le capotage et destinés à évoluer à l'intérieur du canal annulaire 4. En position de vol en croisière, ces volets sont escamotés dans l'alignement du capotage, comme représenté en traits interrompus, à l'intérieur d'un logement 13. Au contraire, en position de porte d'inversion déployée, les volets 26 basculent dans la position en trait plein jusqu'à venir en butée contre la tuyère en obturant la région du canal 4 dans laquelle ils se trouvent.

On obtient le même effet que dans le cas de la figure 3. On voit sur la figure 4A que le flux chaud FC est très décentré vers l'amont par rapport au flux froid FF ce qui fournit une protection maximale de la porte 7.

Comme on l'a déjà indiqué, il y a intérêt à ce que la commande de la porte 7 et des volets soit synchronisée. A cet effet, les volets sont prolongés vers l'arrière, au-delà de leur axe 27 par un bras 28 de commande qui par son propre poids ou sous l'action d'un ressort par exemple assure le déploiement automatique des volets lorsque la porte 7 commence à s'ouvrir. Le flux de gaz froid agissant derrière les volets suffit à les maintenir dans la position de la figure 4. En revanche, lorsque la porte se referme, un téton 29 porté par celle-ci relève le bras 28 et replace les volets en position escamotée tant que la porte reste fermée.

REVENDICATIONS

1 - Moteur à réaction du type à double flux équipé d'un inverseur de poussée dans lequel un capotage extérieur entoure une tuyère axiale d'où s'écoule un "flux chaud", le capotage délimitant avec celle-ci un conduit annulaire dans lequel circule un flux de gaz dit "flux froid", ledit capotage présentant, au-delà de l'extrémité arrière de la tuyère, un prolongement délimitant un canal circulaire et l'inverseur étant constitué par une seule porte basculante formée par une partie mobile du prolongement du capotage articulée autour d'un axe transversal à l'axe de la tuyère, la porte pouvant évoluer d'une position escamotée dans le prolongement du capotage à une position déployée dans laquelle elle vient en butée contre la partie opposée fixe du capotage et s'étend transversalement au canal circulaire qu'elle obture tout en dégageant un espace libre en aval de la tuyère pour permettre à la totalité des gaz de s'échapper en une veine unique radialement vers l'extérieur, caractérisé en ce que, pour aider à la déviation de la veine gazeuse, on prévoit des moyens (11-12 ; 24-25 ; 26) créant, lorsque la porte d'inverseur (7) est en position active déployée, une zone de moindre pression Z1 le long de la partie B du bord de la tuyère (1) axiale avoisinant la porte basculante.

2 - Moteur selon la revendication 1 caractérisé en ce que la commande des moyens créant une zone de moindre pression Z1 est couplée avec la commande de la porte d'inverseur (7).

3 - Moteur selon les revendications 1 et 2 caractérisé en ce que les moyens (11-12 ; 24-25 ; 26) créant la zone de moindre pression Z1 assurent, le long de la partie B du bord de la tuyère avoisinant la porte basculante, une déviation latérale d'une partie du flux chaud avant que ce dernier franchisse le plan TE de l'extrémité arrière de la tuyère (1).

4 - Moteur selon la revendication 3 caractérisé en ce que le bord B de la tuyère avoisinant la porte basculante est équipé d'au moins un volet mobile (12 ; 25) entre une position inactive ou de croisière dans laquelle le flux chaud ne subit aucune déviation et une position active dans laquelle le ou les dits volets découvrent, en amont du plan d'extrémité arrière de la tuyère, au moins un espace libre (11 ; 24) en direction de la porte d'inverseur.

5 - Moteur selon la revendication 4 caractérisé en ce que le ou lesdits volets (25) en position active obturent au moins partiellement le canal annulaire (4) entourant la tuyère (1).

6 - Moteur selon les revendications 1 et 2 caractérisé en ce que les moyens (26) créant la zone de moindre pression Z1 assurent une restriction du passage du "flux froid" dans la partie du canal annulaire (4) voisine de la porte d'inverseur (7).

7 - Moteur selon la revendication 6 caractérisé en ce que les moyens assurant une restriction sont constitués par au moins un volet articulé (26), disposé dans le canal annulaire (4) et mobile entre une position d'obturation du canal et une position effacée.

8 - Moteur selon la revendication 7 caractérisé en ce que le volet (26) est articulé sur la paroi (3) du capotage et, en position escamotée, est aligné avec ladite paroi du capotage.

9 - Moteur selon l'une quelconque des revendications 7 et 8 caractérisé en ce que le déplacement du volet est asservi au déplacement de la porte d'inverseur par l'intermédiaire d'une tringlerie (28) associée au volet (26) et actionnée par la porte (7).

Fig. 1

0150649

Fig. 2A

Fig. 2B

Fig. 2

Fig. 3

0150649

Fig. 4

Fig. 4 A

### Office européen des brevets

## RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | FR-A-2 526 872  (HUREL-DUBOIS) <br> * En entier * | 1 | F 02 K    1/60 <br> F 02 K    1/56 |
| A | FR-A-1 153 561  (KORGANOFF et al.) <br> * Page 3, colonne de gauche, ligne 37 - page 3, colonne de droite, ligne 3; figure 7 * | 1,2 | |
| A | BE-A-  501 767  (S.N.E.C.M.A.) <br> * Figure 2; page 2, lignes 41-44 * | 1 | |
| A | FR-A-2 318 316  (ROLLS-ROYCE) <br> * Page 10, lignes 2-15; figure 1 * | 1 | |
| A | GB-A-2 049 580  (ASTECH) <br> * En entier * | 1,2 | DOMAINES TECHNIQUES RECHERCHES (Int. Cl.4) <br><br> F 02 K |
| A | US-A-3 660 982  (GOLZAN) <br> * Colonne 3, ligne 74 - colonne 4, ligne 7; figures 13,14 * | 1 | |
| A | US-A-2 987 879  (D.M. BROWN) <br> * En entier * | 1 | |
| | ---        -/- | | |

Le présent rapport de recherche a été établi pour toutes les revendications

| Lieu de la recherche <br> LA HAYE | Date d'achèvement de la recherche <br> 01-04-1985 | Examinateur <br> MC GINLEY C.J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82

**Office européen des brevets**

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-2 620 622 (B.K.O. LUNDBERG) <br> * Figure 4; colonne 5, lignes 35-73 * | | |

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 01-04-1985 | MC GINLEY C.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82